# EUROPEAN PATENT APPLICATION

(11) **EP 3 627 118 A1**
(43) Date of publication of application: **25.03.2020**
(21) Application number: 18195516.2
(22) Date of filing: 19.09.2018
(51) Int. Cl.: G01J 1/04, G01J 1/42, B29C 64/264

(54) **DETERMINATION DEVICE**

(71) Applicant: Concept Laser GmbH, 96215 Lichtenfels (DE)
(72) Inventor: HUNZE, Stephan, 01796 Pirna (DE); JUNGE, Jens, 96465 Neustadt bei Coburg (DE)
(74) Representative: Hafner & Kohl Patent- und Rechtsanwälte Partnerschaft mbB

(57) **Abstract**

Determination device (1) for determining at least one parameter of an energy beam (5) for an apparatus (3) for additively manufacturing three-dimensional objects by means of successive layerwise selective irradiation and consolidation of layers of a build material which can be consolidated by means of an energy beam (5), wherein at least a first and a second beam guiding element (12, 14) are adapted to guide the energy beam (5) to a determination unit (7) which is adapted to determine at least one parameter of the energy beam (5), wherein the determination unit (7) is movable, in particular rotatable, into at least a first and a second determination position, wherein the determination unit (7) is adapted to receive the energy beam (5) from the first beam guiding element (12, 14) in the first determination position and to receive the energy beam (5) from the second beam guiding element (12, 14) in the second determination position.

## Description

The invention relates to a determination device for determining at least one parameter of an energy beam for an apparatus for additively manufacturing three-dimensional objects by means of successive layerwise selective irradiation and consolidation of layers of a build material which can be consolidated by means of an energy beam.

Apparatuses for additively manufacturing three-dimensional objects using energy beams to selectively consolidate build material are generally known from prior art. Typically, determination devices are used for determining parameters of the energy beam to ensure that the correct amount of energy is deposited at the correct position in the build material. Such determination devices can, for example, be arranged inside the process chamber of the apparatus and the energy beam can be guided onto a determination plane, for example a detector, of the determination device, wherein multiple parameters of the energy beam, such as the position, the intensity or the like can be determined.

Further, it is known from prior art that dependent on the position of the energy beam, for example dependent on the deflection angle under which the energy beam is incident on the build plane, the shape of the energy beam, e.g. a spot shape can deviate from the usual circular or annular spot, i.e. the spot of the energy beam can be deformed to an elliptical shape. In this case, it is possible that due to the deformed shape of the spot, the energy beam is not completely incident on the detector of the determination device. Hence, the measurement result is incorrect, as parts of the energy beam are not considered.

It is an object of the present invention to provide an improved determination device, in particular a determination device that allows for guiding the whole energy beam to the determination device independent of the deflection angle.

The object is inventively achieved by a determination device according to claim 1. Advantageous embodiments of the invention are subject to the dependent claims.

The determination device described herein is a determination device for an apparatus for additively manufacturing three-dimensional objects, e.g. technical components, by means of successive selective layerwise consolidation of layers of a powdered build material ("build material") which can be consolidated by means of an energy beam, in particular a laser beam. A respective build material can be a metal, ceramic or polymer powder. A respective energy beam can be a laser beam. A respective apparatus can be an apparatus in which an application of build material and a consolidation of build material is performed separately, such as a selective laser sintering apparatus or a selective laser melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates a determination device for determining the parameter of the energy beam used in additive manufacturing processes to selectively consolidate the build material. The invention is based on the idea that at least a first and a second beam guiding element are provided which are adapted to guide the energy beam to a determination unit which is adapted to determine at least one parameter of the energy beam, wherein the determination unit is movable, in particular rotatable, into at least a first and a second determination position, wherein the determination unit is adapted to receive the energy beam from the first beam guiding element in the first determination position and to receive the energy beam from the second beam guiding element in the second determination position.

Thus, the energy beam can be guided in the process chamber to the determination device that is arranged in the process chamber. The determination device comprises at least a first and a second beam guiding element that are arranged in different positions relative to the determination unit of the determination device. The energy beam can selectively be guided to the first or the second beam guiding element from which beam guiding element the energy beam is guided towards the determination unit. The determination unit is movable between at least a first determination position and a second determination position, wherein the determination unit faces the first determination element in the first determination position and faces the second determination element in the second determination position. In other words, the determination unit can receive the energy beam that is emitted from the first determination element when the determination unit is positioned in the first determination position and the determination unit can receive the energy beam that is emitted from the second determination element when the determination unit is positioned in the second determination position.

Therefore, it is possible that the energy beam is not directly received, for example by a determination device that is arranged in the build plane, but the energy beam can be reflected or otherwise guided via the beam guiding elements to the determination unit to ensure that the energy beam is properly received by the determination unit. It is also ensured that the lateral position of the determination unit inside the process chamber can be static and that the determination unit is rotated between the individual determination positions. Thus, the lateral position in which the energy beam is received via the determination unit is always the same and the direction under which the energy beam is guided towards the determination unit varies with the individual beam guiding element on which the energy beam is guided.

Further, the inventive determination device allows for determining the at least one parameter of the energy beam in multiple (at least two) determination positions in the build plane, wherein the energy beam is guided via the first beam guiding element in the first position in the build plane and via the second beam guiding element in a second position in the build plane towards the determination unit. In other words, the energy beam can be scanned over different position of the build plane, wherein in a first position the first beam guiding element may be arranged, guiding the energy beam incident on the first beam guiding element to the determination unit. Accordingly, the second beam guiding element may be arranged in a second position of the build plane. Thus, the energy beam being guided / deflected to the second position is incident on the second beam guiding element that guides the energy beam towards the determination unit.

Hence, it is particularly possible to use the inventive determination device to determine the power / the amount of energy that is deposited via the energy beam in different positions in the build plane. Therefore, it is possible to use the determination device for processes in which the energy beam is scanned between different positions across the build plane, preferably to characterize such processes regarding the amount of energy that is deposited in the individual determination positions. Thus, it can be assured via the inventive determination device, that a predefined amount of energy can be deposited in each determination position. This allows for verifying that in each determination position the proper amount of energy is deposited and therefore, build material arranged in the corresponding position in a regular mode of operation may be properly irradiated.

According to a first embodiment of the inventive determination device, the at least two beam guiding elements and the determination unit are mounted to a determination body, in particular a determination plate. In other words, a platelike body can be provided to which the at least two beam guiding elements, i.e. the first beam guiding element and the second beam guiding element, and the determination unit can be mounted. The determination body can be arranged in the process chamber, for example in the build plane, e.g. on a carrying element that is used to carry the object and the non-consolidated build material in a regular mode of operation. In order to determine the at least one parameter of the energy beam the determination body can be arranged in the process chamber and the energy beam can be guided to the individual positions on the determination body in which the at least one parameter of the energy beam has to be determined. According to the position or the beam guiding element to which the energy beam is guided, the determination unit can be moved to the corresponding determination position, as described before.

Preferably, the determination unit is arranged centrally with respect to the at least two beam guiding elements. By arranging the determination unit centrally with respect to the at least two beam guiding element, it is possible that the determination unit only has to be rotated to be moved into / reach the individual determination positions. Of course, an arbitrary number of beam guiding elements can be provided to ensure that the energy beam can be determined for an arbitrary number of positions on the determination body, for instance.

The at least two beam guiding units may further be arranged around the determination unit facing towards the determination unit. The determination unit may, for instance, be arranged in the center of the determination body, whereas the beam guiding elements can be arranged around the determination unit. According to this embodiment, the energy beam that is guided onto one of the beam guiding elements, is always guided towards the determination unit, as the individual beam guiding elements are arranged around the determination unit and face the determination unit. Hence, the determination unit only has to be moved, in particular rotated, to the corresponding determination position, i.e. facing the corresponding beam guiding element onto which the energy beam is currently incident, to receive the energy beam.

The inventive determination device may further be improved in that the at least two determination elements may be arranged in defined positions, in particular relative to the determination unit. By arranging the at least two determination elements in defined positions, in particular relative to the determination unit, it is assured that the position of the beam guiding element corresponds to a lateral position in the process chamber, for example with respect to the build plane. Hence, the determination of the at least one parameter of the energy beam that is guided via one of the corresponding beam guiding elements corresponds to the energy beam that would be incident in that position of the build plane in which the corresponding beam guiding element is arranged. Further, the repeatability is improved by having the individual beam guiding elements arranged in defined positions.

Further, the at least two beam guiding elements may be built as or may comprise a reflective element for reflecting the energy beam towards the determination unit, in particular a parabolic mirror. Hence, the energy beam can be guided to each of the beam guiding elements from which it is reflected via the reflective element to the determination unit.

The at least two beam guiding elements can further be adapted to collimate the energy beam, for example the at least two beam guiding elements may be built as off-axis parabolic mirrors. By using a parabolic mirror it is further possible to collimate the energy beam that is usually focused to a position in the build plane, i.e. the plane in which build material is arranged to be irradiated in a regular mode of operation. Hence, the determination of the at least one parameter of the energy beam can be performed with a collimated beam with a defined spot diameter. Further, the angle of incidence can be controlled in that, preferably the energy beam is incident rectangular on the determination unit. As the determination unit does only have to be rotated between the at least two determination positions, the repeatability, comparability and accuracy of the determination process can be enhanced. Hence, the inventive determination device provides an efficient way to determine the at least one parameter improving the quality of the results.

According to another embodiment of the inventive determination device, the determination unit may be adapted to rotate in the at least two determination positions in a predefined order, in particular corresponding to a sequence in which the energy beam is guided to the at least two beam guiding elements. Hence, it is possible to perform the determination process automatically, wherein the energy beam is guided to the individual beam guiding elements in a predefined sequence. The determination unit can be rotated, e.g. via a rotation stage, preferably comprising an actuator, such as a motor, to the corresponding determination positions in that it is assured that the determination unit faces the correct beam guiding element that is currently irradiated with the energy beam.

Hence, it is assured that the energy beam is properly guided to the beam guiding element and from the beam guiding element that is currently irradiated with the energy beam to the determination unit that faces the beam guiding element. Hence, every position in which a beam guiding element is positioned can be used to determine the at least one parameter of the energy beam. By performing the determination process automatically, the determination process can be performed more efficiently.

The inventive determination device can further be improved in that a plurality of beam guiding elements can be arranged in pre-defined positions, in particular on the determination body. Providing a plurality of beam guiding elements and arranging the plurality of beam guiding elements in pre-defined positions with respect to the determination unit, allows for determining the at least one parameter of the energy beam in a plurality of different positions in the build plane. As described before, from each of the beam guiding elements it is possible to reflect the energy beam towards the determination unit and therefore, to determine the at least one beam parameter for each of the positions in which a beam guiding element is arranged.

According to another embodiment of the inventive determination device, at least one central beam guiding element may be arranged above the determination unit and adapted to guide the energy beam to at least one other beam guiding element, wherein the determination unit is adapted to receive the energy beam from the at least one other beam guiding element. Hence, a central beam guiding element may be arranged in that the energy beam that is guided perpendicular onto the build plane is incident on the central beam guiding element. In order to determine the at least one parameter of the energy beam in the position inside the process chamber in which the determination unit is arranged, at least one central beam guiding element may be provided.

The at least one central beam guiding element is arranged on top of the determination unit or above the determination unit, respectively. Hence, the energy beam can be guided to the central beam guiding element that faces another beam guiding element which is arranged facing the determination unit. Hence, the energy beam that is reflected at the central beam guiding element and is guided to the other beam guiding element from where it is again reflected to the determination unit. Of course, it has to be assured that the orientations of the central beam guiding element, the determination unit and the other beam guiding element correspond in that determination position.

The orientation requirement can, for example, be simplified by assigning a specific beam guiding element to the central beam guiding element for guiding the energy beam from the central beam guiding element to the determination unit. In other words, the determination device comprises a specific beam guiding element which is oriented in that it can receive the energy beam being guided from the central beam guiding element and guide the received energy beam from the central beam guiding element to the determination unit. Hence, it only has to be assured that the determination unit faces the specific beam guiding element, when the at least one parameter of the energy beam with the energy beam in the central position has to be determined.

Further, it is possible that the central beam guiding element is coupled to the determination unit in that the central beam guiding element moves / rotates together with the determination unit between the individual determination positions. Hence, if the determination unit is positioned in that it can receive the energy beam from the specific beam guiding element, it is assured that the central beam guiding element is also in the correct position. Besides, it is possible to statically arrange the central beam guiding element and the specific beam guiding element in that, if the energy beam is guided to the central beam guiding element it is automatically guided to the specific beam guiding element and from there to the determination unit. Hence, in the determination process in which the at least one beam parameter for the central position is determined, only the determination unit has to be positioned in the correct determination position facing the specific beam guiding element.

For example, the central beam guiding element may be mounted above the determination unit via a frame, in particular an L-shaped frame. The frame can be used to mount the central beam guiding element, wherein it is assured that the determination unit can receive the energy beam in all determination position or receive the energy beam that is reflected from the individual beam guiding elements, respectively. This can be achieved by moving the frame together with the beam guiding element or to arrange the frame in that in the region in which a geometrical shadow is generated via the frame, no beam guiding element is arranged.

The at least one parameter of the energy beam may comprise or relate to an intensity of the energy beam and/or an intensity distribution of the energy beam and/or a geometry of the energy beam, in particular a spot shape and/or a spot size. In general, any arbitrary parameter of the energy beam can be determined as long as the determination unit comprises the correct detector. The determination unit may, for example, comprise a photo diode, a PSD sensor, a camera or the like.

Besides, the invention relates to an apparatus for additively manufacturing three-dimensional objects by means of successive layerwise selective irradiation and consolidation of layers of a build material which can be consolidated by means of an energy beam, with a determination device, in particular an inventive determination device, as described before, which determination device comprises at least a first and a second beam guiding element adapted to guide the energy beam to a determination unit which is adapted to determine at least one parameter of the energy beam, wherein the determination unit is movable, in particular rotatable, into at least a first and a second determination position, wherein the determination unit is adapted to receive the energy beam from the first beam guiding element in the first determination position and to receive the energy beam from the second beam guiding element in the second determination position.

Further, the invention relates to a method for operating an apparatus for additively manufacturing three-dimensional objects by means of successive layerwise selective irradiation and consolidation of layers of a build material which can be consolidated by means of an energy beam, wherein the energy beam is guided to a determination unit of a determination device, in particular an inventive determination device, as described before, via at least a first and a second beam guiding element, wherein the determination unit is moved, in particular rotated, into at least a first and a second determination position, wherein at least one parameter of the energy beam is determined via the determination unit in the first and the second determination position, wherein the determination unit receives the energy beam from the first beam guiding element in the first determination position and from the second beam guiding element in the second determination position.

Of course, all details, features and advantages described with respect to the inventive determination device are fully transferable to the inventive apparatus and the inventive method. Self-evidently, the inventive method may be performed on the inventive apparatus, preferably using an inventive determination device.

Exemplary embodiments of the invention are described with reference to the Fig. The Fig. are schematic diagrams, wherein
- Fig. 1: shows an inventive determination device in side view in a first determination position;
- Fig. 2: shows a top view of the inventive determination device from Fig. 1; and
- Fig. 3: shows the inventive determination device from Fig. 1 in side view in a second determination position.

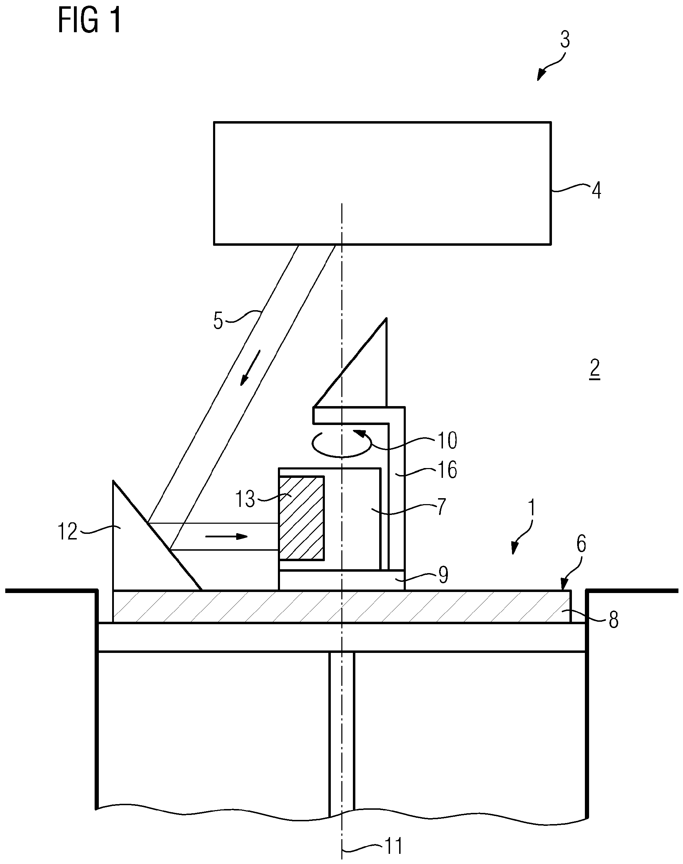

Fig. 1 shows a determination device 1 that is arranged in a process chamber 2 of an apparatus 3 for additively manufacturing three-dimensional objects. The apparatus 3 comprises an irradiation device 4 that is adapted to generate an energy beam 5 and guide the energy beam across a build plane 6, i.e. a plane in which build material is arranged to be irradiated in a regular mode of operation. Of course, the arrangement that is depicted in Fig. 1 is merely exemplary and any other arbitrary mode of arranging the determination device 1 in the process chamber 2 is also feasible. For example, it is not necessary that the additive manufacturing apparatus 3 comprises a height-adjustable carrying element, as depicted in Fig. 1.

The determination device 1 further comprises a determination unit 7 that is arranged centrally on a determination body 8, for example a metal plate. The determination unit 7 is arranged on a rotation stage 9 that can be rotated, as indicated via arrow 10, for example about a (vertical) axis 11. By rotating the determination unit 7 to different determination positions, the energy beam 5 can be received with the determination unit 7 from different beam guiding elements 12, as will be described below. In the situation depicted in Fig. 1, the energy beam 5 is guided to a first beam guiding element 12 which reflects the energy beam 5 to the determination unit 7, in particular to a determination element 13, such as an optical detector, preferably a PSD-sensor. Therefore, the determination device 1 is adapted to determine the at least one parameter of the energy beam 5, such as an intensity of the energy beam 5 and/or an intensity distribution of the energy beam 5 and/or a geometry of the energy beam 5, in particular a spot shape and/or a spot size.

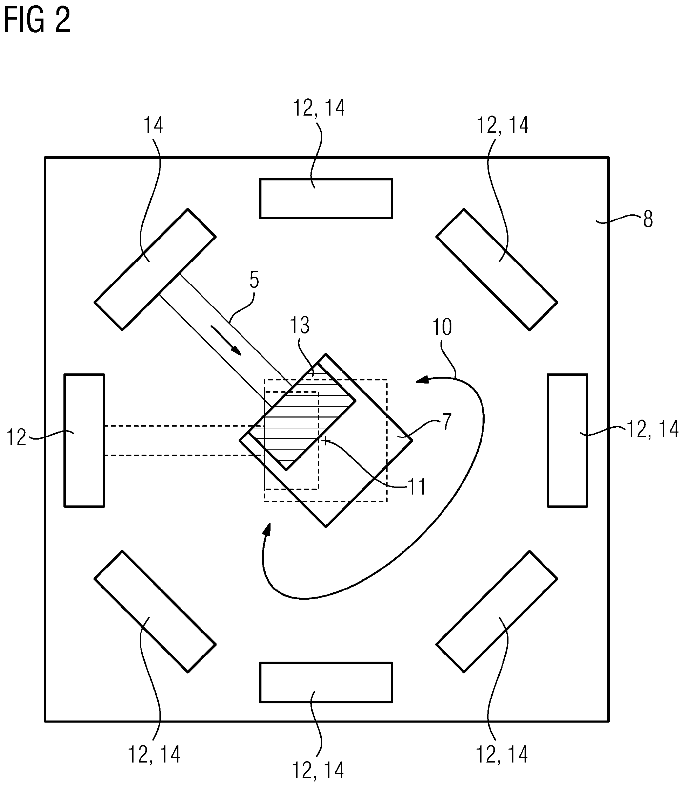

As described before, in Fig. 1 the determination unit 7 is depicted in a first determination position in which the determination element 13 faces the first beam guiding element 12. By rotating the determination unit 7 (as indicated via arrow 10), the determination unit 7 can be moved between different determination positions. In Fig. 2, the dashed contour depicts the first determination position in which the determination unit 7 is arranged, as indicated in Fig. 1. To reach the situation that is depicted in Fig. 2, the determination unit 7 is rotated as indicated via arrow 10 clockwise into the second determination position in which the determination element 13 of the determination unit 7 faces the second beam guiding element 14. Hence, the energy beam 5 can be guided to the position of the determination body 8 in which the second beam guiding element 14 is arranged, wherein the second beam guiding element 14 reflects the energy beam 5 towards the determination element 13 of the determination unit 7.

As can be derived from Fig. 2, the determination unit 7 can be rotated in various determination positions in which the determination element 13 of the determination unit 7 can receive the energy beam 5 that is guided via the individual beam guiding elements 12, 14. Of course, any beam guiding element 12, 14 can be deemed "first" or "second" beam guiding element. Further, the amount and the arrangement of the beam guiding elements 12, 14 is merely exemplary and any other arbitrary number or arrangement, in particular spatial arrangement, is also feasible. Fig. 2 further shows that the beam guiding elements 12, 14 are spatially arranged around the centrally arranged beam guiding unit 7 in that it is possible to move the determination unit 7 into the several determination positions by merely rotating the determination unit 7 about the axis 11.

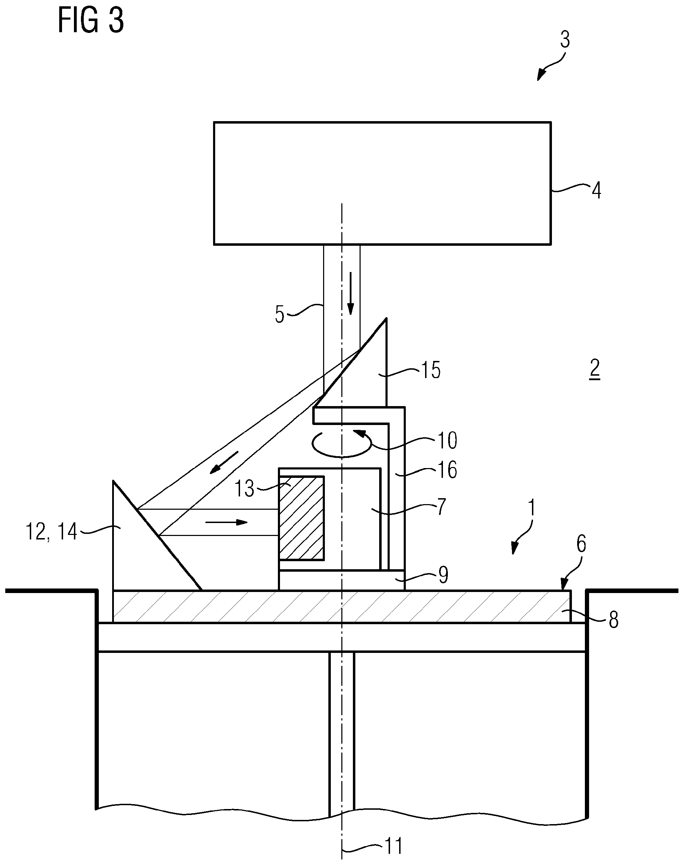

Fig. 3 shows another side view of the determination device 1 in which the at least one parameter of the energy beam 5 has to be determined for a central position. For example, the energy beam 5 is guided from the irradiation device 4 perpendicular towards the build plane 6. With the energy beam 5 being guided to the central position, the energy beam 5 is incident on a central beam guiding element 15 that is mounted above the beam guiding unit 7. In this exemplary embodiment the central beam guiding element 15 is mounted on a L-shaped frame 16 which is mounted to the rotation stage 9. In other words, the frame 16 and the central beam guiding element 15 rotate together with the determination unit 7 ensuring that the determination element 13 is always available for the energy beam 5 to be incident on the determination element 13. In other words, the determination element 13 is not covered via the frame 16. The energy beam 5 that is incident on the central beam guiding element 15 is reflected to the beam guiding element 12, 14 or a specific a beam guiding element (not shown). Hence, the energy beam 5 is reflected at the central beam guiding element 15 and the at least one other beam guiding element 12, 14 towards the determination element 13.

The beam guiding elements 12, 14, 15 can be built as parabolic mirrors for collimating the energy beam 5 and guiding the energy beam 5 to the determination element 13. Hence, it can be assured that the at least one parameter of the energy beam 5 can be determined properly independent of the position and the angle of incidence.

Self-evidently, all details, features and advantages described with respect to the individual embodiments can arbitrarily be combined or exchanged. Of course, the inventive method may be performed on the inventive apparatus 3, preferably using the inventive determination device 1.

## Claims

1. Determination device (1) for determining at least one parameter of an energy beam (5) for an apparatus (3) for additively manufacturing three-dimensional objects by means of successive layerwise selective irradiation and consolidation of layers of a build material which can be consolidated by means of an energy beam (5), **characterized by** at least a first and a second beam guiding element (12, 14) adapted to guide the energy beam (5) to a determination unit (7) which is adapted to determine at least one parameter of the energy beam (5), wherein the determination unit (7) is movable, in particular rotatable, into at least a first and a second determination position, wherein the determination unit (7) is adapted to receive the energy beam (5) from the first beam guiding element (12, 14) in the first determination position and to receive the energy beam (5) from the second beam guiding element (12, 14) in the second determination position.

2. Determination device according to claim 1, **characterized in that** the at least two beam guiding elements (12, 14) and the determination unit (7) are mounted to a determination body (8), in particular a determination plate.

3. Determination device according to claim 1 or 2, **characterized in that** the determination unit (7) is arranged centrally with respect to the at least two beam guiding elements (12, 14).

4. Determination device according to one of the preceding claims, **characterized in that** the at least two beam guiding elements (12, 14) are arranged around the determination unit (7) facing towards the determination unit (7).

5. Determination device according to one of the preceding claims, **characterized in that** the at least two beam guiding elements (12, 14) are arranged in defined positions, in particular relative to the determination unit (7).

6. Determination device according to one of the preceding claims, **characterized in that** the at least two beam guiding elements (12, 14) are built as or comprise a reflective element for reflecting the energy beam (5) towards the determination unit (7), in particular a parabolic mirror.

7. Determination device according to one of the preceding claims, **characterized in that** the at least two beam guiding elements (12, 14) are adapted to collimate the energy beam (5).

8. Determination device according to one of the preceding claims, **characterized in that** the determination unit (7) is adapted to rotate in the at least two determination positions in a predefined order, in particular corresponding to a sequence in which the energy beam (5) is guided to the at least two beam guiding elements (12, 14).

9. Determination device according to one of the preceding claims, **characterized by** a plurality of beam guiding elements (12, 14) arranged in predefined positions, in particular on the determination body (8).

10. Determination device according to one of the preceding claims, **characterized by** at least one central beam guiding element (15) that is arranged above the determination unit (7) and adapted to guide the energy beam (5) to at least one other beam guiding element (12, 14), wherein the determination unit (7) is adapted to receive the energy beam (5) from the at least one other beam guiding element (12, 14).

11. Determination device according to claim 10, **characterized in that** a specific beam guiding element (12, 14) is assigned to the central beam guiding element (15) for guiding the energy beam (5) from the central beam guiding element (15) to the determination unit (7).

12. Determination device according to one of the preceding claims, **characterized in that** the central beam guiding element (15) is mounted above the determination unit (7) via a frame (16), in particular an L-shaped frame.

13. Determination device according to one of the preceding claims, **characterized in that** the at least one parameter of the energy beam (5) comprises or relates to an intensity of the energy beam (5) and/or an intensity distribution of the energy beam (5) and/or a geometry of the energy beam (5), in particular a spot shape and/or a spot size.

14. Apparatus (3) for additively manufacturing three-dimensional objects by means of successive layerwise selective irradiation and consolidation of layers of a build material which can be consolidated by means of an energy beam (5), **characterized by** a determination device (1), in particular a determination device (1) according to one of the preceding claims, which determination device (1) comprises at least a first and a second beam guiding element (12, 14) adapted to guide the energy beam (5) to a determination unit (7) which is adapted to determine at least one parameter of the energy beam (5), wherein the determination unit (7) is movable, in particular rotatable, into at least a first and a second determination position, wherein the determination unit (7) is adapted to receive the energy beam (5) from the first beam guiding element (12, 14) in the first determination position and to receive the energy beam (5) from the second beam guiding element (12, 14) in the second determination position.

15. Method for operating an apparatus (3) for additively manufacturing three-dimensional objects by means of successive layerwise selective irradiation and consolidation of layers of a build material which can be consolidated by means of an energy beam (5), **characterized in that** the energy beam (5) is guided to a determination unit (7) of a determination device (1), in particular a determination device (1) according to one of the claims 1 to 13, via at least a first and a second beam guiding element (12, 14), wherein the determination unit (7) is moved, in particular rotated, into at least a first and a second determination position, wherein at least one parameter of the energy beam (5) is determined via the determination unit (7) in the first and the second determination position, wherein the determination unit (7) receives the energy beam (5) from the first beam guiding element (12, 14) in the first determination position and from the second beam guiding element (12, 14) in the second determination position.
